**Europäisches Patentamt**

**European Patent Office**

**Office européen des brevets**

(19)

(11) Publication number : **0 485 351 B1**

# (12) EUROPEAN PATENT SPECIFICATION

(45) Date of publication of patent specification :
10.05.95 Bulletin 95/19

(51) Int. Cl.⁶ : **H04B 7/26**

(21) Application number : **91850244.4**

(22) Date of filing : **07.10.91**

(54) **A method of avoiding interference between a first and a second message in a mobile telephone system.**

(30) Priority : **07.11.90 SE 9003548**

(43) Date of publication of application :
**13.05.92 Bulletin 92/20**

(45) Publication of the grant of the patent :
**10.05.95 Bulletin 95/19**

(84) Designated Contracting States :
**AT BE CH DE ES FR GB IT LI NL**

(56) References cited :
**EP-A- 0 318 033**
**EP-A- 0 324 508**
**US-A- 4 737 978**

(73) Proprietor : **TELEFONAKTIEBOLAGET L M ERICSSON**
**Patent and Trademark Department**
**S-126 25 Stockholm (SE)**

(72) Inventor : **Chambert, Georg William Robin**
**Hävelvägen 5**
**S-756 47 Uppsala (SE)**

(74) Representative : **Lövgren, Tage et al**
**Telefonaktiebolaget L M Ericsson**
**Patent Department**
**S-126 25 Stockholm (SE)**

EP 0 485 351 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### TECHNICAL FIELD

The present invention relates to a method of avoiding interference between a first and a second message in a mobile telephone system. The first message states or contains a request from a mobile station for access to one or more base stations in the system, and the second message contains a request from another mobile station for access to a given base station when the mobile station wishes handover to this given base station. The method, however, is not limited to these two use procedures.

### BACKGROUND ART

As in the case of earlier known mobile radio systems, mobile telephone systems which operate with time divided multiple access (TDMA), such as the proposed Pan-European mobile telephone system GSM, for example, operate with so-called handover. As is well known, handover implies that a call connection or a call that is in progress and connected between a mobile station and a first base station is transferred so that the call connection will remain established between the mobile station and another base station. The handover request is normally sent from the mobile station to the first base station, which maintains the connection prior to handover.

In a mobile telephone system such as a GSM-type TDMA-system for example, a so-called random access request may also be sent to a base station from an idle mobile station. There are normally four different causes as to why such a request is made, the causes being registration, paging response, original call, i.e. a call to the base station indicating that a call connection is desired, and non-defined causes.

A handover request HA can be sent from a number of mobile stations within the area covered by the base station (the cell). A handover request is normally sent from a mobile station that is located on the border of the cell area of an adjacent or bordering base station, so that this latter base station is able to take over the call connection and maintain said connection with improved call quality and/or with less interference from other channels.

Generally speaking, during an ongoing call connection, the mobile station will measure the strength of the signal from the transmitting/receiving base station and also the signal strength from adjacent base stations over given measuring channels (SACCH) in the system. The mobile station sends the results of these measurements to the base station, where an evaluation is made. The base station is able to decide, on the basis of this evaluation, whether the call connection shall continue over the instant base station or whether the call shall be handed over to another base station, in accordance with the aforegoing. For example, if, when evaluating said signal strength, the base station decides that a handover shall take place, a so-called handover command is sent to the mobile station via a special channel FACCH which forms part of the traffic channel TCH already used by the call connection. When the mobile station receives the handover command, it is aware of the new channel through which the call shall be connected to the new base station, and therewith sends a "handover access", i.e. a message to the effect that the mobile station seeks access to the new base station ("here I come"). Handover access is also transmitted over the channel FACCH.

Another mobile station within the area covered by the original base station may be in its monitoring mode ("sleep mode") in order to be activated either by the subscriber who wishes to make a telephone call from this particular mobile station or to be able to receive an incoming call. For example, when establishing a call connection from the mobile to a base station, a so-called "random access" message RA is sent from the mobile to a base station, requesting access thereto. This message is transmitted over a common control channel RACH (random access channel) and contains a number of sync bits, normally 8 bits in the case of the GSM-system.

Both the channel FACCH over which the handover command HA is transmitted and the channel RACH over which the random access message RA is transmitted to a base station occupy a given time slot within one frame, although both the handover command HA and the random access command RA differ from remaining messages in the mobile radio system insomuch that they are only transmitted once in the form of a single burst within the time slot that is allotted to FACCH and RACH respectively.

### DISCLOSURE OF THE INVENTION

The message RA and the message HA are transmitted in the form of a number of message bits and a number of synchronizing bits in a shortened burst within one time slot and over a given carrier frequency in accordance with the TDMA-principle. The message bits in both RA and HA are coded in accordance with a given colour code, in order to distinguish RA and HA from interference signals in the radio medium. However, problems can occur since these two messages are of similar structure and may be coded with the same colour code. The message RA is transmitted over a given channel RACH and the message HA is transmitted over another channel FACCH, this latter channel forming part of a traffic channel TCH, but both RACH and FACCH can use the same carrier frequency.

When a call connection is established from a mobile station to the nearest base station, it is possible for a message RA to be received by another base station which borders on said nearest base station. If a handover access message HA is sent from another mobile station to this bordering base station, the first message RA from the first mentioned mobile station may be interpreted by the adjacent base station as a message concerning the establishment of a connection from the second mobile station instead of a handover access message. The reverse is also possible, i.e. a handover access message from a first mobile station to a base station can be interpreted by a second base station (an adjacent or bordering base station) as a request for the establishment of a call connection from a second mobile station.

Finally, a message HA1 requesting handover access from a first mobile station to a base station may be received by another base station which is intended or prepared to receive another message HA2 requesting handover access from another mobile station.

According to the proposed method, misinterpretation of a random access message or a handover access message is avoided by limiting the number of coding possibilities in the random access message to, for instance, half and allowing the remaining half of the coding possibilities to be used by the handover access message. This procedure admittedly reduces the number of possibilities of coding the random access message and the handover access message by fifty percent, but since the random access message can never be coded as a handover access message, these two messages will always be separated from one another from the coding aspect.

The inventive method is characterized by the features set forth in the following Claims.

Thus, the object of the present invention is to provide a method which will prevent confusion in a mobile radio system between two messages which are functionally different but of similar structure and transmitted in similar fashions.

## BRIEF DESCRIPTION OF THE DRAWINGS

The inventive method will now be described in more detail with reference to the accompanying drawings, in which

Figure 1 illustrates schematically part of a cell-divided mobile telephone system;

Figure 2 illustrates a given frame structure in a TDMA mobile telephone system;

Figure 3 illustrates the format of a handover access message in the system illustrated in Figure 1;

Figure 4 illustrates a frame structure which is different to the TDMA frame structure shown in Figure 2;

Figure 5 illustrates the format of a random access message in the system illustrated in Figure 1;

Figure 6 illustrates schematically two mobile stations in the system shown in Figure 1 which request handover access; and

Figures 7 and 8 illustrate the format of the handover access messages illustrated in Figure 6.

## BEST MODE OF CARRYING OUT THE INVENTION

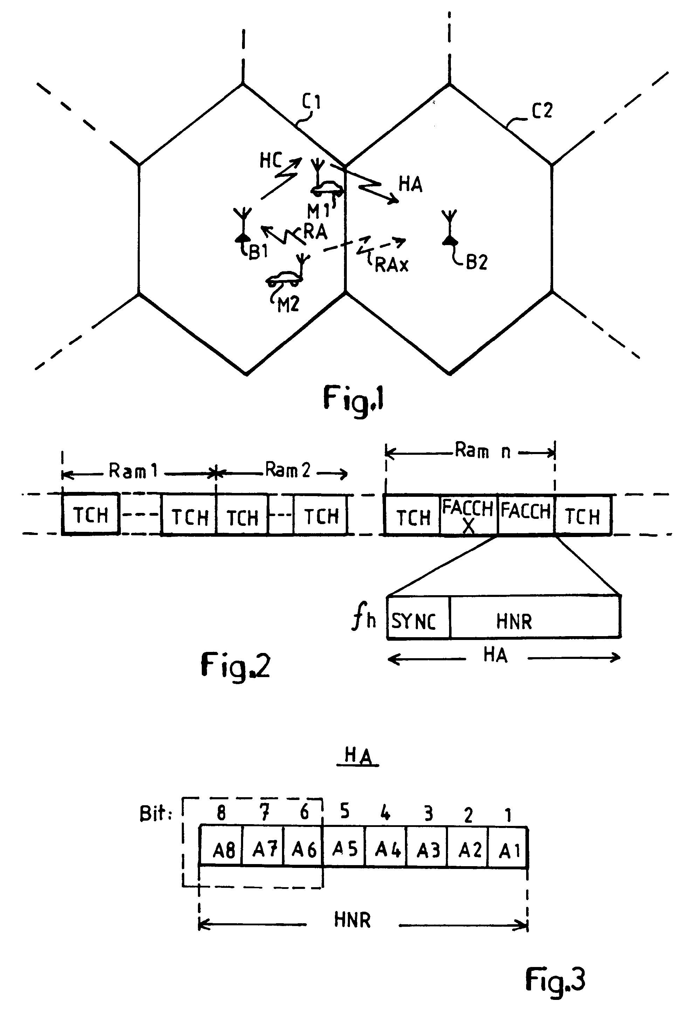

Figure 1 illustrates schematically part of a cellular mobile radio system having two cells C1 and C2, where cell C1 constitutes the area covered by a base station B1 and cell C2 constitutes the area covered by a base station B2. Located within the cell C1 is a mobile station M1 which communicates with the base station B1. A mobile station M2 is also located within the cell C1 and is intended to establish a call connection to the base station B1. The base station B1 will therewith put through the connection to a mobile telephone exchange (not shown) in a known manner. The mobile station M1 communicates with the mobile telephone exchange through a connection established via the base station B1.

It is assumed that the mobile station M1 moves towards the boundary line separating the cells C1 and C2 and that because the mobile station M1 moves away from its base station B1, the quality of the call communicated via this base station will become progressively worse. Consequently, the base station B1 sends a handover command HC to the mobile station and commands said station to reroute the connection to the base station B2 over another channel. The mobile station M1 receives information concerning the frequency and time slot of the new channel over which the mobile M1 shall communicate, now via the base station B2. Subsequent to having received the handover command HC, the mobile station M1 sends a handover access message HA to the new base station B2, over the new channel.

Figure 2 illustrates the manner in which such a handover access message is transmitted. The mobile station M1 has previously obtained, via the handover command HC, information indicating the channel over which the mobile M1 shall communicate with the new base station B2, i.e. has received information concerning carrier frequency $f_h$ and the allotted time slot in a frame. The handover access message HA is now transmitted in this time slot, and only once in the form of a burst in said time slot. This channel is the so-called FACCH channel.

The message HA consists of a synchronizing part SYNC and a message, so-called handover number HNR. This number consists, for example, of an 8-bit word (see for instance, GSM Recommendation 04.08 - v 3.8.0, page 328) which is used by the new base station as a reference in access identification. According to the proposed method, there is selected a number of m bits from the field HNR, and these bits are coded by means of a code which is particular to and solely intended for the handover access message HA and not for the access message RA.

Figure 3 illustrates an example where the field HNR consists of eight bits which form a so-called "handover reference" word. In one example, the three most signifcant bits A8, A7 and A6 are chosen and coded, for instance, in accordance with the following:

| A8 | A7 | A6 |
|----|----|----|
| 0  | 0  | 1  |
| 0  | 1  | 0  |
| 0  | 1  | 1  |

The remaining bits A5-A1 in HNR may consist of some sort of known colour coding which will distinguish HNR from interference signals in the radio medium.

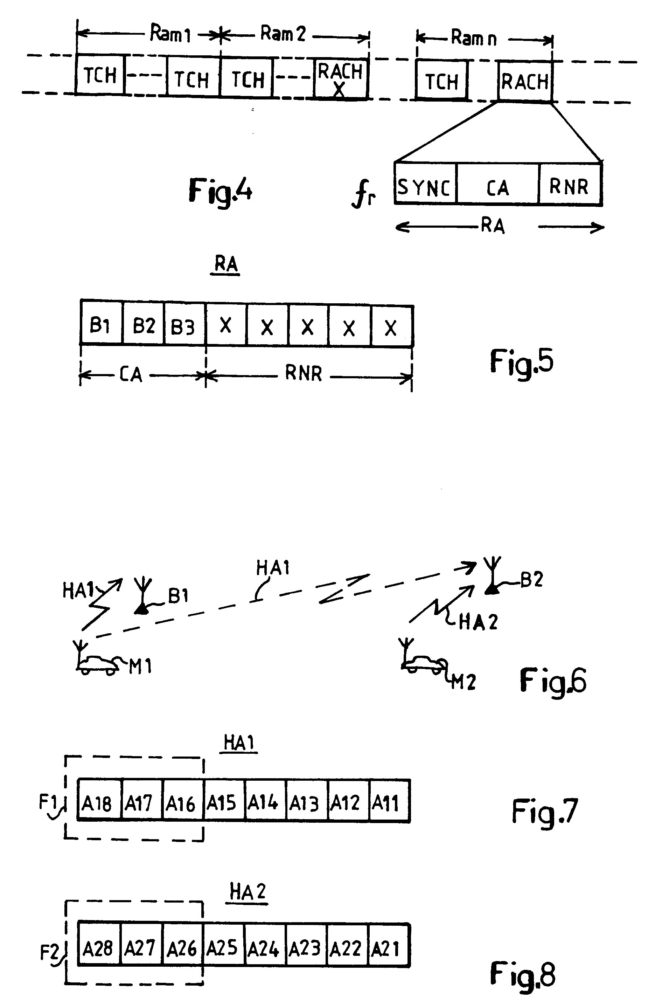

A random access message RA is shown in Figure 4. This message consists of a synchronizing part SYNC, a part CA ("CAUSE") which states the cause of the access message, and a part RNR which is formed by a number which denotes a colour code, in order to distinguish the random access message RA from interference signals in the radio medium. The random access message RA is transmitted over a given channel RACH which, similar to FACCH, is comprised of a burst within a given time slot of the standard time slots for the traffic channels TCH.

Figure 5 illustrates in more detail the format of a random access message RA. The cause field CA in this case consists of three bits B1-B3, which are sufficient to form these words which indicate the reasons for the access message. A closer description of the significance of these words in a GSM-system is found, for instance, in GSM Rec. 04.08, Figure 9.1, "CHANNEL REQUEST message content". According to this example, five causes are listed and the bits B1, B2, B3 can be coded as: 100, 101, 110, 111 and 000. The field RNR forms a random number with the aid of the bits X, which gives a colour code for the RA-message. Coding of the bit X in RNR is irrelevant in this respect. According to the proposed method, coding of the bits B1, B2, B3 in the RA-message shall differ totally from the coding of the bits A8, A7, A6 in the HA-message. This is possible, for instance, with the coding given above. A simple binary code has been used in this case.

In the system illustrated in Figure 1, it is assumed that the message RA transmitted from the mobile station M2 and received by and decoded in the base station B2 as an unknown random access message RAX. But the base station B2 expects to receive a handover access message HA from the mobile station M1. If the FACCH of the HA-message transmits over the same carrier frequency $f_h$ as the RACH of the RA-message, i.e. $f_h = f_r$, the RAX-message can be interpreted as being an HA-message transmitted from the base station B2. If, however, in accordance with the present invention, the first three bits in HNR have been given a coding which is particular to the HA-messages, the base station B2 is able to distinguish between the HA-messages and the RA-messages and RAX can never be interpreted as being an HA-message.

Figure 6 illustrates a different case, in which the two handover access messages HA1 and HA2 transmitted from respective mobile stations M1 and M2 can be confused with one another. The mobile station M1 transmits the message HA1 which is received and detected correctly by the base station B1, but the message HA1 may also reach the base station B2. Another mobile station is assumed to transmit a message HA2 which is intended to be detected in the base station B2. However, the message HA1 may be transmitted on the same carrier frequency $f_h$ as the message HA2 and may be received by base station B2 prior to the message transmitted over FACCHX according to Figure 2, therewith causing the base station to register the mobile station M1 as a new subscriber, although this message was actually intended for the mobile station M2. It is not possible to prevent this by distinguishing between the codes in the first three bits A8-A6 in HNR, since these codes have already been reserved both for HA1 and HA2 for distinguishing HA1 and HA2 from the random access message RA.

Figures 7 and 8 illustrate the format of the two handover access messages HA1 and HA2 respectively transmitted from respective mobile stations M1 and M2. The field F1 and F2 having the respective bits A18-A16 and A28-A26 is already reserved for the coding which distinguishes the messages HA1, HA2 from a random access message RA. The remaining bits A15-A11 in the message are coded so as to adopt p different combinations from a total of q combinations. The bits A25-A21 in the messsage HA2 have therewith been caused to adopt solely the remaining q-p combinations so as to distinguish the message HA1 from the message HA2.

The non-formatted field RNR in a RA-message can be utilized, in a similar fashion, to distinguish between two random access messages between which confusion can arise in a base station.

**Claims**

1. A method for avoiding interference between a first and a second message (RA and HA respectively) in a mobile telephone system that comprises a plurality of base stations (B1, B2) and a plurality of mobile stations (M1, M2), in which control information and call/ data information is communicated in accordance with the principle of time divided multiple access TDMA, wherein in one time section (RACH) the first message (RA) contains a constant message field (CA) which consists of a given number of data elements (B3-B1) and the second message (HA) in another time section (FACCH) contains a message field (HNR) which consists of a different number of data elements (A8-A1), **characterized** in that

    a) the data elements (B3-B1) in the constant message field (CA) belonging to the first message (RA) are coded so that m combinations of a total of n possible combinations can be assumed, where m < n;

    b) a number of data elements (A8-A6) in the message field (HNR) belonging to the second message (HA) at least equal to the number of data elements in the constant message field (CA) belonging to the first message (RA) are coded so as to assume the remaining (n-m) combinations, and so that the (n-m) combinations differ from the m combinations of the data elements in the constant message field (CA).

2. A method according to Claim 1, **characterized** in that

    a) the constant message field (CA) belonging to the first message (RA) indicates a request for access to a given base station (B1) from a mobile station (M2); and

    b) the message field (HNR) belonging to the second message (HA) indicates a request for access to a given base station (B2) from a mobile station (M1) upon handover from a base station (B1) to said given base station (B2), wherein said number of data elements (A8-A6) in the message field (HNR) for coding the remaining (n-m) combinations is exactly equal to the number of data elements (B3-B1) in the constant message field (CA).

3. A method of avoiding interference between a first and a second message (HA1, HA2) in a mobile telephone system comprising a plurality of base stations (B1, B2) and a plurality of mobile stations (M1, M2) in which control information and call/data information is communicated in accordance with the principle of time divided multiple access TDMA, wherein both of said messages contain a constant first message field (F1 and F2 respectively), with a given coding of ingoing data elements (A18-A16 and A28-A26 respectively) and a second message field, each having a number of data elements (A15-A11 and A25-A21 respectively), **characterized** in that the data elements (A15-A11) in the second message field of the first message (HA1) are coded so as to assume p combinations of a total number of q possible combinations, whereas the data elements (A25-A21) in corresponding message fields of the second message (HA2) are coded so as to assume solely the remaining (q-p) combinations.

4. A method according to Claim 3, **characterized** in that said first message (HA1) contains a handover access message (HNR) from a mobile station (M1) for detection in a first intended base station (B1) but which may also be detected by a second, unintended base station (B2); and in that said second message (HA2) includes a handover access request (HNR) intended for detection in said second base station (B2).

**Patentansprüche**

1. Verfahren zur Vermeidung einer Interferenz zwischen einer ersten und einer zweiten Nachricht (RA bzw. HA) in einem Mobiltelefonsystem, welches mehrere Basisstationen (B1, B2) und mehrere Mobilstationen (M1, M2) aufweist, in welchem Steuerinformation und Ruf/Dateninformation auf der Grundlage eines zeitunterteilten Mehrfachzugriffs (TDMA) übertragen wird, wobei in einem Zeitabschnitt (RACH) die erste Nachricht (RA) ein konstantes Nachrichtenfeld (CA) enthält, welches aus einer vorbestimmten Anzahl an Datenelementen (B3 bis B1) besteht, und die zweite Nachricht (HA) in einem anderen Zeitabschnitt (FACCH) ein Nachrichtenfeld (HNR) enthält, welches aus einer unterschiedlichen Anzahl an Datenelementen (A8 bis A1) besteht,
dadurch **gekennzeichnet,** daß

    a) die Datenelemente (B3 bis B1) in dem konstanten Nachrichtenfeld (CA), welches zu der ersten Nachricht (RA) gehört, so kodiert sind, daß mn Kombinationen von insgesamt n möglichen Kombinationen eingenommen werden können, wobei m kleiner als n ist;

    b) eine Anzahl an Datenelementen (A8 bis A6) in dem Nachrichtenfeld (HNR), welches zu der zweiten Nachricht (HA) gehört, zumindest gleich der Anzahl an Datenelementen in dem konstanten Nachrichtenfeld (CA), welches zu der ersten Nachricht (RA) gehört, so kodiert sind, daß sie die verbleibenden (n - m) Kombinationen einnehmen, und so, daß die (n - m) Kombinationen sich von den m Kombinationen der Datenelemente in dem konstanten Nachrichtenfeld (CA) unterscheiden.

2. Verfahren nach Anspruch 1, dadurch gekennzeichnet, daß

a) das zu der ersten Nachricht (RA) gehörige, konstante Nachrichtenfeld (CA) eine Anforderung zum Zugriff auf eine vorgegebene Basisstation (B1) von einer Mobilstation (M2) anzeigt; und

b) das zu der zweiten Nachricht (HA) gehörige Nachrichtenfeld (HNR) eine Anforderung auf Zugriff auf eine vorgegebene Basisstation (B2) von einer Mobilstation (M1) nach einer Übergabe von einer Basisstation (B1) auf die vorgegebene Basisstation (B2) anzeigt, wobei die Anzahl von Datenelementen (A8 bis A6) in dem Nachrichtenfeld (HNR) zum Kodieren der verbleibenden (n - m) Kombinationen exakt gleich der Anzahl an Datenelementen (B3 bis B1) in dem konstanten Nachrichtenfeld (CA) ist.

3. Verfahren zur Vermeidung einer Interferenz zwischen einer ersten und einer zweiten Nachricht (HA1, HA2) in einem Mobiltelefonsystem, welches mehrere Basisstationen (B1, B2) und mehrere Mobilstationen (M1, M2) aufweist, und in welchem Steuerinformation und Ruf/Dateninformation entsprechend dem Prinzip eines zeituntterteilten Mehrfachzugriffs (TDMA) übertragen wird, wobei diese beiden Nachrichten ein konstantes, erstes Nachrichtenfeld (F1 bzw. F2), mit einer vorgegebenen Kodierung ankommender Datenelemente (A18 bis A16 bzw. A28 bis A26), enthalten sowie ein zweites Nachrichtenfeld, wobei jedes Nachrichtenfeld eine Anzahl an Datenelementen (A15 bis A11 bzw. A25 bis A21) enthält,

dadurch **gekennzeichnet,** daß die Datenelemente (A15 bis A11) in dem zweiten Nachrichtenfeld der ersten Nachricht (HA1) so kodiert sind, daß sie p Kombinationen einer Gesamtanzahl von q möglicher Kombinationen annehmen, wogegen die Datenelemente (A25 bis A21) in entsprechenden Nachrichtenfeldern der zweiten Nachricht (HA2) so kodiert sind, daß sie nur die verbleibenden (q - p) Kombinationen annehmen.

4. Verfahren nach Anspruch 3, dadurch gekennzeichnet, daß die erste Nachricht (HA1) eine Übergabezugriffsnachricht (HNR) von einer Mobilstation (M1) zur Erfassung in einer ersten, gewünschten Basisstation (B1) enthält, die jedoch auch von einer zweiten, ungewünschten Basisstation (B2) empfangen werden kann, und daß die zweite Nachricht (HA2) eine Übergabezugriffsanforderung (HNR) enthält, welche zum Empfang in der zweiten Basisstation (B2) gedacht ist.

**Revendications**

1. Un procédé pour éviter un brouillage entre un premier message et un second message (respectivement RA et HA) dans un système de téléphonie mobile qui comprend un ensemble de stations de base (B1, B2) et un ensemble de stations mobiles (M1, M2), dans lequel une information de commande et une information d'appel/données sont transmises conformément au principe d'accès multiple par répartition dans le temps, ou AMRT, dans lequel pendant un intervalle de temps (RACH), le premier message (RA) contient un champ de message constant (CA) qui consiste en un nombre déterminé d'éléments de données (B3-B1), et le second message (HA) dans un autre intervalle de temps (FACCH) contient un champ de message (HNR) qui consiste en un nombre différent d'éléments de données (A8-A1),

**caractérisé** en ce que

a) les éléments de données (B3-B1) dans le champ de message constant (CA) appartenant au premier message (RA) sont codés de façon à pouvoir prendre m combinaisons sur un total de n combinaisons possibles, avec m < n ;

b) un nombre d'éléments de données (A8-A6) dans le champ de message (HNR) appartenant au second message (HA) au moins égal au nombre d'éléments de données dans le champ de message constant (CA) appartenant au premier message (RA), sont codés de façon à prendre les (n-m) combinaisons restantes, et de façon que les (n-m) combinaisons diffèrent des m combinaisons des éléments de données dans le champ de message constant (CA).

2. Un procédé selon la revendication 1, **caractérisé** en ce que

a) le champ de message constant (CA) appartenant au premier message (RA) indique une demande d'accès à une station de base donnée (B1), à partir d'une station mobile (M2) ; et

b) le champ de message (HNR) appartenant au second message (HA) indique une demande d'accès à une station de base donnée (B2) à partir d'une station mobile (M1), au moment d'un transfert à partir d'une station de base (B1) vers la station de base donnée (B2), le nombre d'éléments de données (A8-A6) dans le champ de message (HNR) pour le codage des (n-m) combinaisons restantes étant exactement égal au nombre d'éléments de données (B3-B1) dans le champ de message constant (CA).

3. Un procédé pour éviter un brouillage entre un premier message et un second message (HA1, HA2) dans un système de téléphonie mobile comprenant un ensemble de stations de base (B1, B2) et un ensemble de stations mobiles (M1, M2), dans lequel une information de commande et une information d'appel/données sont transmises conformément au principe d'accès multiple par répartition dans le temps, ou AMRT, dans lequel les deux messages contiennent un premier champ de message constant (respectivement F1 et F2), avec un codage déterminé d'éléments de données entrants (respectivement A18-A16 et A28-A26), et un second champ de message, ayant chacun un nombre d'éléments de données (respectivement A15-A11 et A25-A21), **caractérisé** en ce que les éléments de données (A15-A11) dans le second champ de message du premier message (HA1) sont codés de façon à prendre p combinaisons sur un nombre total de q combinaisons possibles, tandis que les éléments de données (A25-A21) dans des champs de message correspondants du second message (HA2), sont codés de façon à prendre seulement les (q-p) combinaisons restantes.

4. Un procédé selon la revendication 3, **caractérisé** en ce que le premier message (HA1) contient un message d'accès de transfert (HNR) qui provient d'une station mobile (M1), pour être détecté dans une première station de base désirée (B1), mais qui peut également être détecté par une seconde station de base, non désirée (B2) ; et en ce que le second message (HA2) comprend une demande d'accès de transfert (HNR) qui est destinée à être détectée dans la seconde station de base (B2).

Fig.1

Fig.2

HA

Fig.3

Fig.4

Fig.5

Fig.6

Fig.7

Fig.8